# EUROPÄISCHE PATENTSCHRIFT

(11) **EP 3 335 616 B1**
(45) Veröffentlichungstag und Bekanntmachung des Hinweises auf die Patenterteilung: **26.02.2020**
(21) Anmeldenummer: 17203728.5
(22) Anmeldetag: 27.11.2017
(51) Int. Cl.: A47L 15/48, A47L 15/42, F28D 7/00, F28D 15/02, D06F 58/20

(54) **HAUSHALTSGESCHIRRSPÜLMASCHINE MIT WÄRMEPUMPENANORDNUNG**
DOMESTIC DISHWASHER WITH HEAT PUMP ASSEMBLY
LAVE-VAISSELLE À USAGE MÉNAGER POURVU DE SYSTÈME DE POMPE À CHALEUR

(30) Priorität: 13.12.2016 ES 201631578
(43) Veröffentlichungstag der Anmeldung: 20.06.2018
(73) Patentinhaber: BSH Hausgeräte GmbH, 81739 München (DE)
(72) Erfinder: Estremera Carrera, Vanesa, 31006 Pamplona (ES)

(56) Entgegenhaltungen:
- EP-A1- 2 064 982
- EP-A1- 2 871 432
- WO-A1-2015/070900
- US-A- 3 658 075

## Beschreibung

Die Erfindung betrifft eine Haushaltsgeschirrspülmaschine mit einem Aufnahmeraum zur Aufnahme von Spülgut, wobei die Haushaltsgeschirrspülmaschine eine Wärmepumpenanordnung mit wenigstens einem Verdampfer zum Verdampfen eines Kältemittels und einem Verflüssiger zum Kondensieren des Kältemittels umfasst, wobei der Verdampfer und/oder der Verflüssiger ein oder mehrere wenigstens abschnittsweise flächig ausgebildete Wärmetauscherelemente umfassen.

Gattungsgemäße Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte wird das Spülgut mit Spülflotte (= Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet.

Haushaltsgeräte, wie z. B. Haushaltsgeschirrspülmaschinen, bzw. hierfür geeignete Wärmetauscher werden beispielsweise in der US 3 658 075 A, der EP 2 871 432 A1 oder der WO 2015/070900 A1 beschrieben.

Sowohl beim Reinigen als auch beim Trocknen muss Wärme von einer Wärmequelle (z. B. einer Wärme- oder Luftheizung) der Haushaltsgeschirrspülmaschine auf die Spülflotte oder auf in die Haushaltsgeschirrspülmaschine eintretende oder darin zirkulierende Luft übertragen werden. Hierfür sind im Stand der Technik bereits Wärmetauscherelemente bekannt, die beispielsweise aus Metall gefertigt sind und als Rohrschlange vorliegen. Der Wärmeübergang zwischen dem innerhalb des Wärmetauscherelements fließenden Mediums und der Spülflotte bzw. der Luft, auf die Wärme vom Wärmetauschermedium übertragen oder von denen Wärme auf das Wärmetauschermedium übertragen werden soll, ist jedoch noch verbesserungswürdig.

Aufgabe der vorliegenden Erfindung ist es, eine Haushaltsgeschirrspülmaschine mit zumindest einem Wärmetauscherelement vorzuschlagen, die den bekannten Stand der Technik vorteilhaft weiterbildet.

Die Aufgabe wird gelöst durch eine Haushaltsgeschirrspülmaschine mit den Merkmalen des unabhängigen Patentanspruchs.

Die Haushaltsgeschirrspülmaschine gemäß vorliegender Erfindung weist zusätzlich zu einem Aufnahmeraum zur Aufnahme von Spülgut eine Wärmepumpenanordnung auf. Die Wärmepumpenanordnung umfasst ein als Verdampfer wirkendes Wärmetauscherelement zum Verdampfen eines Kältemittels und einen Verdichter zum Verdichten des verdampften Kältemittels. Mit Hilfe des Verdichters wird das in den Verdichter beim Betrieb der Wärmepumpenanordnung eintretende gasförmige Kältemittel komprimiert, wobei es sich erwärmt. Ferner umfasst die Wärmepumpenan-ordnung ein als Verflüssiger wirkendes Wärmetauscherelement, in dem das erwärmte gasförmige Kältemittel wieder kondensiert und hierbei Wärme abgibt, die für die Erwärmung von in der Haushaltsgeschirrspülmaschine vorhandene Spülflotte oder in den Aufnahmeraum eintretende oder dort zirkulierend Luft genutzt werden kann. Anschließend wird das verflüssigte Kältemittel mit Hilfe eines Expansionsorgans (in der Regel eines Drosselventils) entspannt und gelangt schließlich wieder zurück zum Verdampfer, in der es unter Wärmeaufnahme wieder in den gasförmigen Zustand übergeht, um dann erneut dem Verdichter zugeführt zu werden.

Erfindungsgemäß ist nun vorgesehen, dass zumindest das oder eines der Wärmetauscherelemente (vorzugsweise alle Wärmetauscherelemente der Wärmepumpenanordnung), die von dem genannten Kältemittel durchströmt werden, zwei Flächenelemente umfasst, die stellenweise über Verbindungsstellen in Verbindung stehen (selbstverständlich können auch mehr als zwei Flächenelemente vorhanden sein). In jedem Fall ist vorgesehen, dass zumindest zwei benachbart zueinander angeordnete Flächenelemente und die vorzugsweise singulären Verbindungsstellen einen innenliegenden Freiraum begrenzen, über den das Kältemittel das Wärmetauscherelement passieren kann. Das Wärmetauscherelement umfasst hierzu wenigstens einen Kältemitteleinlass und einen Kältemittelauslass. Ferner sind die Verbindungsstellen derart angeordnet, dass das Kältemittel beim Passieren des Wärmetauscherelements mehrfach umgelenkt und dabei vermischt wird.

An dieser Stelle sei darauf hingewiesen, dass die Verbindungsstellen in einem Bereich des Wärmetauscherelements angeordnet sind, der von einem Randbereich nach innen hin beabstandet ist. Im Randbereich können die einzelnen Flächenelemente durch eine sich über den Umfang des Wärmetauscherelements erstreckende Verbindung verbunden sein, um das Wärmetauscherelement flüssigkeitsdicht auszubilden. Die Verbindung im Randbereich ist jedoch nicht Gegenstand der Erfindung und kann praktisch beliebig ausgebildet sein.

In jedem Fall umfasst das Wärmetauscherelement keinen Strömungskanal, durch den das Kältemittel vom Kältemitteleinlass zum Kältemittelauslass laminar und ohne Umlenkungen strömt. Vielmehr wird durch die Verbindungsstellen, von denen bevorzugt wenigstens 20, besonders bevorzugt wenigstens 50, vorhanden sind, ein zwischen den beiden über die Verbindungsstellen verbundenen Flächenelementen vorhandener Hohlraum derart unterbrochen, dass sich eine Art Strömungskanalnetz bildet. Das Wärmetauscherelement weist somit eine Vielzahl von miteinander in Verbindung stehenden Kanalabschnitten auf. Das Kältemittel wird daher immer wieder abgelenkt und in mehrere Ströme aufgeteilt, die sich schließlich wieder an anderer Stelle teilweise vereinen, wobei dieser Vorgang mehrfach stattfinden kann. Im Prinzip besitzt das Wärmetauscherelement also ebenfalls einen Strömungskanal, der jedoch durch die Verbindungsstellen in mehrere Kanalabschnitte unterteilt ist, die wiederum strömungstechnisch miteinander in Verbindung stehen.

Insbesondere sind die Verbindungsstellen im Hohlraum der zwei übereinander mit vorgegebenem Spaltabstand voneinander angeordneten Flächenelemente als singuläre, vorzugsweise im Wesentlichen orthogonal zum jeweiligen Flächenelement angeordnete, Überbrückungselemente ausgebildet.

Insbesondere werden die Verbindungsstellen hierbei durch Abschnitte eines der Flächenelemente oder beider Flächenelemente gebildet, wobei die jeweiligen Abschnitte eines Flächenelements mit dem jeweils gegenüberliegenden Flächenelement in direktem Kontakt stehen können.

An dieser Stelle sei darauf hingewiesen, dass im Folgenden in der Regel nur ein Wärmetauscherelement beschrieben wird. Sollte die Haushaltsgeschirrspülmaschine mehrere Wärmetauscherelemente aufweisen, was vorliegend bevorzugt ist, so können ein, mehrere oder alle Wärmetauscherelemente die nachfolgend beschriebenen Merkmale aufweisen. Selbstverständlich können sich einzelne Wärmetauscherelemente der Haushaltsgeschirrspülmaschine auch voneinander unterscheiden.

Bei den Flächenelementen handelt es sich vorzugsweise um zumindest größtenteils ebene Platten, die aufeinandergelegt und verbunden, z. B. verklebt, verschweißt oder verlötet, wurden. Zumindest eine der Platten umfasst in einer bevorzugten Ausführungsform Ausbuchtungen, die z. B. durch Tiefziehen oder Prägen vor dem Zusammenbringen der beiden Flächenelemente in die Platte eingebracht wurden. Die Ausbuchtungen begrenzen schließlich gemeinsam mit den beiden über die Ausbuchtungen verbundenen Flächenelementen den genannten Freiraum.

Darüber hinaus sind die Verbindungsstellen durch oben bereits erwähnte Ausbuchtungen eines oder beider Flächenelemente gebildet. Die Ausbuchtungen können beispielsweise eine zylindrische Grundform aufweisen. Insbesondere handelt es sich bei den Ausbuchtungen um Abschnitte des entsprechenden Flächenelements, wobei das Flächenelement z. B. ursprünglich als plane Platte vorlag und die Ausbuchtungen in die ebene Platte eingeprägt wurden.

Gemäß einer vorteilhaften Weiterbildung stehen die Ausbuchtungen eines ersten Flächenelements mit einem zweiten Flächenelement in direktem Kontakt, wobei die die Ausbuchtungen des ersten Flächenelements umgebenden Bereiche des ersten Flächenelements vom zweiten Flächenelement beabstandet sind. Insbesondere verlaufen die Bereiche der beiden Flächenelemente, die die Ausbuchtungen umgeben, zumindest zwischen den Randbereichen des jeweiligen Wärmetauscherelements parallel zueinander. Zudem ist es von Vorteil, wenn die Flächenelemente im Bereich der Ausbuchtungen miteinander verschweißt oder verlötet sind. Die Ausbuchtungen weisen vorteilhafterweise jeweils einen Abschnitt auf, über den sie mit dem gegenüberliegenden Flächenelement verbunden sind. Darüber hinaus sollten die Ausbuchtungen jeweils einen, beispielsweise zylindrischen, Abschnitt aufweisen, der sich zwischen dem zuvor genannten Abschnitt und dem diesen Abschnitt umgebenden Bereich des die Ausbuchtung aufweisenden Flächenelements erstreckt.

Schließlich ist gemäß der Erfindung vorgesehen, dass die Verbindungsstellen zumindest teilweise unterschiedliche Abstände zueinander aufweisen. Die Verbindungsstellen sind also nicht gleichmäßig über das Wärmetauscherelement verteilt. Vielmehr sollte die Anordnung der Verbindungsstellen keinem geometrischen Muster folgen. Wie erwähnt, wird das Kältemittel beim Passieren des Wärmetauscherelements durch die Verbindungsstellen bzw. die genannten Ausbuchtungen mehrfach umgelenkt. Hierdurch soll eine möglichst turbulente Strömung entstehen, da hierdurch der Wärmeübergang zwischen dem Kältemittel und dem an der Außenseite des Wärmetauscherelements vorbeistreichenden Medium (Spülflotte, Wasserdampf oder Luft) verbessert wird. Dies wird insbesondere dadurch erreicht, dass die Verbindungsstellen mit zumindest teilweise unterschiedlichem gegenseitigem Abstand über das Wärmetauscherelement verteilt angeordnet sind.

Gemäß einer vorteilhaften Weiterbildung umfasst wenigstens ein Wärmetauscherelement zwei Flächenelemente in Form von Metall- oder Kunststoffplatten, die stoffschlüssig, formschlüssig oder mit Hilfe eines Haftmittels miteinander verbunden sind. Beispielsweise könnten die Flächenelemente, die auch abgewinkelt sein können, falls sich das entsprechende Wärmetauscherelement über mehr als eine Wandung der Haushaltsgeschirrspülmaschine erstreckt, verklebt sein. Auch ist es denkbar, die Flächenelemente stellenweise zu verschweißen oder zu verlöten. In jedem Fall sollte die Verbindung derart beschaffen sein, dass das Kältemittel nicht unkontrolliert aus dem Wärmetauscherelement austreten kann.

Nach einer vorteilhaften Weiterbildung umfasst wenigstens ein Wärmetauscherelement zwei Flächenelemente, von denen lediglich eines Ausbuchtungen aufweist. In diesem Fall können zwei Flächenelemente parallel zueinander verlaufen. Die Ausbuchtungen erstrecken sich zwischen dem die Ausbuchtungen umgebenden Abschnitt des die Ausbuchtungen aufweisenden Flächenelements und des mit diesem verbundenen Flächenelement. Hierdurch halten die Ausbuchtungen den genannten Abschnitt und das zuletzt genannte Flächenelement auf Abstand, so dass der erfindungsgemäße Freiraum gebildet ist.

Gemäß einer vorteilhaften Weiterbildung umfasst wenigstens ein Wärmetauscherelement zwei Flächenelemente, wobei beide Flächenelemente Ausbuchtungen aufweisen, und wobei die beiden Flächenelemente zumindest abschnittsweise über die jeweiligen Ausbuchtungen miteinander verbunden sind. Die jeweiligen Ausbuchtungen des ersten Flächenelements sind hierbei in Richtung des zweiten Flächenelements gerichtet. Ebenso sind die Ausbuchtungen des zweiten Flächenelements in Richtung des ersten Flächenelements gerichtet. Die beiden Flächenelemente können dabei derart miteinander verbunden sein, dass die jeweiligen Ausbuchtungen in gegenseitigem Kontakt stehen. Ebenso ist es denkbar, dass die Ausbuchtungen des ersten Flächenelements an dem Abschnitt des zweiten Flächenelements anliegen, der die Ausbuchtungen des zweiten Flächenelements umgibt, wobei die Ausbuchtungen des zweiten Flächenelements an dem Abschnitt des ersten Flächenelements anliegen, der die Ausbuchtungen des ersten Flächenelements umgibt.

Nach einer vorteilhaften Weiterbildung sind die beiden Flächenelemente bezüglich einer Kontaktebene der beiden Flächenelemente spiegelsymmetrisch ausgebildet. Die Kontaktebene verläuft vorzugsweise in einer planen Ebene und läuft durch die Bereiche, in denen die beiden Flächenelemente in gegenseitigem Kontakt stehen. Vorzugsweise begrenzt also jedes Flächenelement im Wesentlichen die halbe Oberfläche des Freiraums.

Gemäß einer vorteilhaften Weiterbildung ist zumindest eine den Aufnahmeraum begrenzende Wandung wenigstens abschnittsweise durch ein Wärmetauscherelement gebildet. Das Wärmetauscherelement liegt also nicht als von den einzelnen Wandungen der Haushaltsgeschirrspülmaschine getrenntes Element vor. Vielmehr stellt zumindest ein Wärmetauscherelement eine Wandung derselben oder zumindest einen Teil einer entsprechenden Wandung dar, so dass die dem Aufnahmeraum zugewandte Oberfläche des entsprechenden Wärmetauscherelements beim Betrieb der Haushaltsgeschirrspülmaschine direkt mit der (beim jeweiligen Spülbetrieb) im Aufnahmeraum zirkulierenden Spülflotte, dem darin enthaltenen Wasserdampf, oder der Luft im Aufnahmeraum in Kontakt gelangen kann. Anders ausgedrückt ist gemäß dieser vorteilhaften Weiterbildung die dem Aufnahmeraum zugewandte Innenoberfläche des Wärmetauscherelements vom Aufnahmeraum her sichtbar und begrenzt diesen teilweise oder ganz.

Beim Betrieb der Haushaltsgeschirrspülmaschine kann also im Aufnahmeraum zirkulierende Spülflotte (z.B. während des Spülbetrieb der Geschirrspülmaschine) oder im Aufnahmeraum vorhandene Luft (wie z.B. während des Trocknungsbetriebs der Geschirrspülmaschine) direkt am entsprechenden Wärmetauscherelement vorbeistreichen und an dieses Wärme abgeben oder Wärme von diesem aufnehmen.

Insbesondere während des Reinigungsschritts ist es von Vorteil, wenn die Spülflotte Wärme vom Wärmetauscherelement aufnimmt. Das entsprechende Wärmetauscherelement kann in diesem Fall als Verflüssiger fungieren, so dass innerhalb des Wärmetauscherelements gasförmiges Kältemitte unter Wärmeabgabe an die Spülflotte kondensiert.

Während des Trocknungsschritts sollte hingegen Wärme von der Luft im Aufnahmeraum bzw. von dem von der Luft mitgeführten Wasserdampf auf ein Wärmetauscherelement übertragen werden. Dieses Wärmetauscherelement sollte also als Verdampfer der Wärmepumpenanordnung fungieren. Vorzugsweise stellt also eine erste Wandung oder ein Teil derselben den Verflüssiger und/oder eine zweite Wandung oder ein Teil derselben den Verdampfer der Wärmepumpenanordnung dar. Vorzugsweise handelt es sich bei der als Verflüssiger dienenden Wandung um die Bodenwandung, um vom Verflüssiger abgegebene Wärme besonders effizient auf die Spülflotte übertragen zu können.

Nach einer vorteilhaften Weiterbildung ist der Aufnahmeraum durch eine Tür und einen Spülbehälter begrenzt, wobei zumindest ein Wärmetauscherelement durch den Spülbehälter gebildet ist. Der Spülbehälter ist in diesem Fall vorzugsweise ein einteiliges Gebilde aus Metall, wobei zumindest eine der Wandungen des Spülbehälters gleichzeitig eine den Aufnahmeraum begrenzende und als Wärmetauscherelement dienende Wandung bildet.

Gemäß einer vorteilhaften Weiterbildung bildet ein durch den Spülbehälter gebildetes und als Verdampfer dienendes Wärmetauscherelement eine Seitenwandung des Spülbehälters. Zusätzlich oder alternativ kann das entsprechende Wärmetauscherelement auch eine Deckenwandung und/oder eine Rückwandung des Spülbehälters ganz oder teilweise bilden. Eine oder mehrere Wandungen des Spülbehälters dienen also in diesem Fall nicht nur als räumliche Begrenzung des Aufnahmeraums. Vielmehr dienen sie gleichzeitig als Wärmetauscherelement, das Teil der Wärmepumpenanordnung der Haushaltsgeschirrspülmaschine ist.

Nach einer vorteilhaften Weiterbildung bildet ein durch den Spülbehälter gebildetes und als Verflüssiger dienendes Wärmetauscherelement eine Bodenwandung des Spülbehälters oder einen Abschnitt derselben. Wird die Wärmepumpenanordnung durch Aktivierung des Verdichters betrieben, so gibt das entsprechende Wärmetauscherelement Wärme an die sich im Bereich der Bodenwandung sammelnde Spülflotte ab. Die Bodenwandung kann beispielsweise eine Vertiefung (so genannter Pumpensumpf) aufweisen, wobei sich das entsprechende Wärmetauscherelement um die Vertiefung erstrecken kann.

Gemäß einer vorteilhaften Weiterbildung ist wenigstens ein Wärmetauscherelement im Bereich einer den Aufnahmeraum begrenzenden Wandung angeordnet, insbesondere ist das Wärmetauscherelement außen auf einer Wandung des Spülbehälters angebracht, und steht mit der Wandung in wärmeleitendem Kontakt. Beispielsweise kann das Wärmetauscherelement parallel zu einer Wandung der Haushaltsgeschirrspülmaschine verlaufen. Bei der Wandung kann es sich um eine Seitenwandung, um die Rückwandung, eine Deckenwandung und/oder auch eine Bodenwandung der Haushaltsgeschirrspülmaschine bzw. eines den Aufnahmeraum umgebenden Spülbehälters handeln. Beispielsweise kann das Wärmetauscherelement über eine Wärmeleitung mit dem Spülbehälter in Verbindung stehen. Durch die Verwendung von Flächenelementen besitzt das jeweilige Wärmetauscherelement eine relativ große Wärmetauscherfläche, wobei die Wärme aufgrund der Wärmeleitung des jeweiligen Wärmetauscherelements auf das Kältemittel oder von diesem auf am Wärmetauscherelement vorbeistreichende Luft oder Spülflotte übertragen werden kann.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- Figur 1: eine Frontansicht einer erfindungsgemäßen Haushaltsgeschirrspülmaschine,
- Figur 2: eine Perspektive eines Spülbehälters einer erfindungsgemäßen Haushaltsgeschirrspülmaschine,
- Figur 3: eine Draufsicht eines erfindungsgemäßen Wärmetauscherelements,
- Figur 4: einen Ausschnitt eines Querschnitts eines erfindungsgemäßen Wärmetauscherelements mit auseinander bewegten Flächenelementen,
- Figur 5: die in Figur 4 gezeigten Flächenelemente in miteinander verbundener Form,
- Figur 6: einen Ausschnitt eines Querschnitts eines weiteren erfindungsgemäßen Wärmetauscherelements,
- Figur 7: einen Ausschnitt eines Querschnitts eines weiteren erfindungsgemäßen Wärmetauscherelements, und
- Figur 8: eine Perspektive eines Spülbehälters einer weiteren erfindungsgemäßen Haushaltsgeschirrspülmaschine.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

Ferner sei darauf hingewiesen, dass teilweise nur manche von mehreren gleichartig ausgebildeten und damit gleichartig dargestellten Bauteilen bzw. Abschnitten mit einem Bezugszeichen versehen sind.

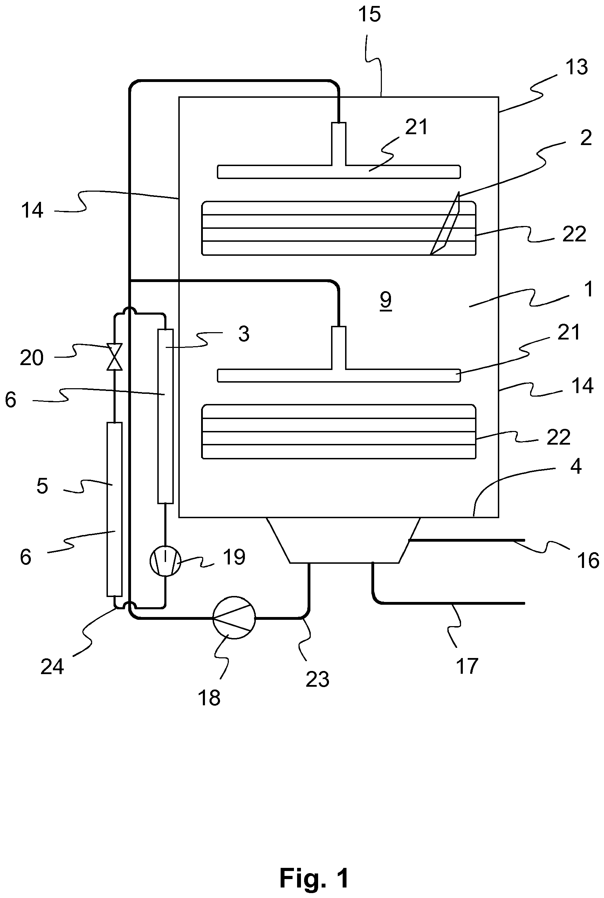

Die erfindungsgemäße Haushaltsgeschirrspülmaschine (siehe beispielsweise Figur 1) umfasst mehrere Wandungen (Seitenwandungen 14, Rückwandung 9, Deckenwandung 15 und Bodenwandung 4), die einen innenliegenden Aufnahmeraum 1 begrenzen, der der Aufnahme von Spülgut 2 dient. Hierfür sind im Aufnahmeraum 1 beispielsweise ein oder mehrere Geschirrkörbe 22 vorhanden. Ferner sind ein oder mehrere Sprüharme 21 vorhanden, mit deren Hilfe das Spülgut 2 z. B. während eines Reinigungsschritts eines Spülprogramms mit Spülflotte, d. h. Wasser oder Wasser mit Reinigungs- und/oder Klarspülmittel versetzt, beaufschlagt werden kann.

Zur Versorgung mit Frischwasser ist die Haushaltsgeschirrspülmaschine über einen Wasserzulauf 16 mit einem nicht gezeigten Frischwassernetz verbunden. Ebenso ist ein Spülflottenablauf 17 vorhanden, über den die Haushaltsgeschirrspülmaschine mit einem Abwassernetz in Verbindung steht und über den verschmutzte Spülflotte aus der Haushaltsgeschirrspülmaschine abgeführt werden kann. Bevor die Spülflotte jedoch über den Spülflottenablauf 17 entsorgt wird, wird sie in der Regel zunächst unter Einbeziehung einer Spülflottenleitung 23 mehrfach im Kreislauf geführt, wobei hierfür eine Umwälzpumpe 18 vorhanden ist.

Um die Spülflotte zu erwärmen, umfasst die Haushaltsgeschirrspülmaschine eine Wärmepumpenanordnung mit einem Verdampfer 3, einem Verdichter 19, einem Expansionsorgan 20 und einem Verflüssiger 5, jeweils verbunden über eine Kältemittelleitung 24. Wird nun der Verdichter 19 aktiviert, so wird das im Bereich des Verdichters 19 gasförmig vorliegende Kältemittel 11 verdichtet. Das verdichtete Kältemittel 11 strömt weiter zum Verflüssiger 5, wo es Wärme abgibt und dabei kondensiert. Das flüssige Kältemittel 11 gelangt anschließend zum Expansionsorgan 20, das eine Druckverminderung bewirkt. Im weiteren Verlauf strömt das noch immer oder zumindest teilweise flüssige Kältemittel 11 zum Verdampfer 3. Dort entzieht es der Umgebung Wärme und wird hierdurch in den gasförmigen Aggregatszustand überführt, um schließlich wieder zum Verdichter 19 zu gelangen, so dass sich der Kältemittelkreislauf schließt.

Im gezeigten Beispiel ist der Verdampfer 3 im Bereich einer Seitenwandung 14 angeordnet, so dass aus dem Aufnahmeraum 1 und damit auch von im Aufnahmeraum 1 vorhandenem Wasserdampf Wärme auf die Wärmepumpenanordnung übertragen werden kann. Der Wasserdampf kondensiert in diesem Fall, so dass die Trocknung des Spülguts 2 während eines Trocknungsschritts unterstützt wird.

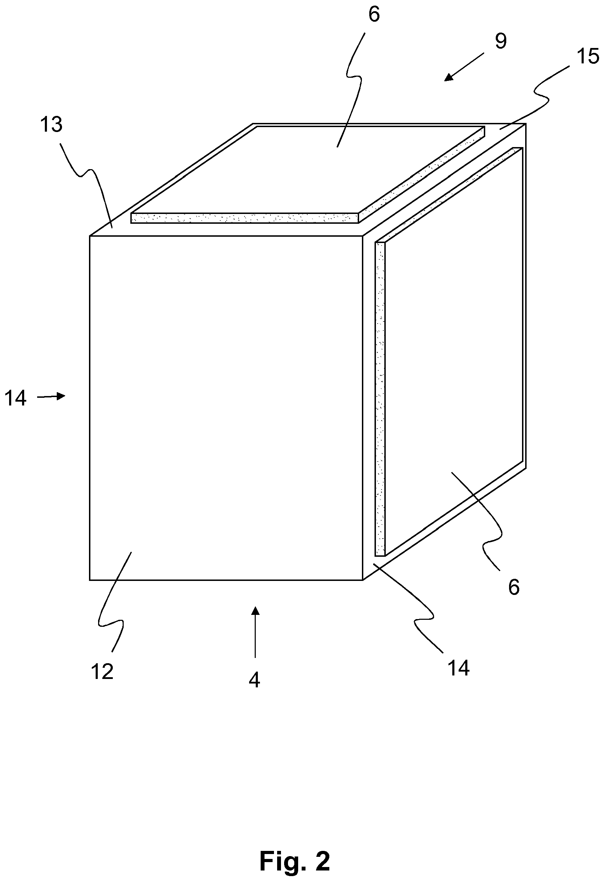

Der Verflüssiger 5 ist hingegen an einer Stelle untergebracht, in der er keinen direkten Kontakt mit dem Spülbehälter 13 aufweist, der durch die Wandungen 4, 9, 14, 15 und einer in Figur 2 gezeigten Tür 12 begrenzt ist. Eine entsprechende Ausführung ist dann sinnvoll, wenn die Spülflotte durch eine entsprechende, nicht gezeigte, Flüssigkeitsführung direkt am Verflüssiger 5 vorbeigeführt wird.

Figur 2 zeigt nun, dass ein oder mehrere Wärmetauscherelemente 6 von außen am Spülbehälter 13 der Haushaltsgeschirrspülmaschine angebracht sein können. Zwischen Spülbehälter 13 und Wärmetauscherelement 6 oder zwischen Wärmetauscherelement 6 und einer nicht gezeigten Außenwand der Haushaltsgeschirrspülmaschine kann sich eine Isolierschicht befinden.

Insbesondere ist es denkbar, dass mehrere Wandungen 4, 9, 14, 15 mit einem Wärmetauscherelement 6 versehen sind, die wiederum über entsprechende Leitungen verbunden sein können.

Erfindungsgemäß ist nun vorgesehen, dass zumindest eines der Wärmetauscherelemente 6, die Teil des Verflüssigers 5 und/oder des Verdampfers 3 sind oder die genannten Bauteile darstellen, zwei Flächenelemente 7 umfasst, die stellenweise über zahlreiche Verbindungsstellen 26 in Verbindung stehen, wobei die Flächenelemente 7 und die Verbindungsstellen 26 einen Freiraum 10, begrenzen, über den das Kältemittel 11 das Wärmetauscherelement 6 passieren kann. Ferner sind die Verbindungsstellen 26 derart angeordnet, dass das Kältemittel 11 beim Passieren des Wärmetauscherelements 6 mehrfach umgelenkt und dabei vermischt wird.

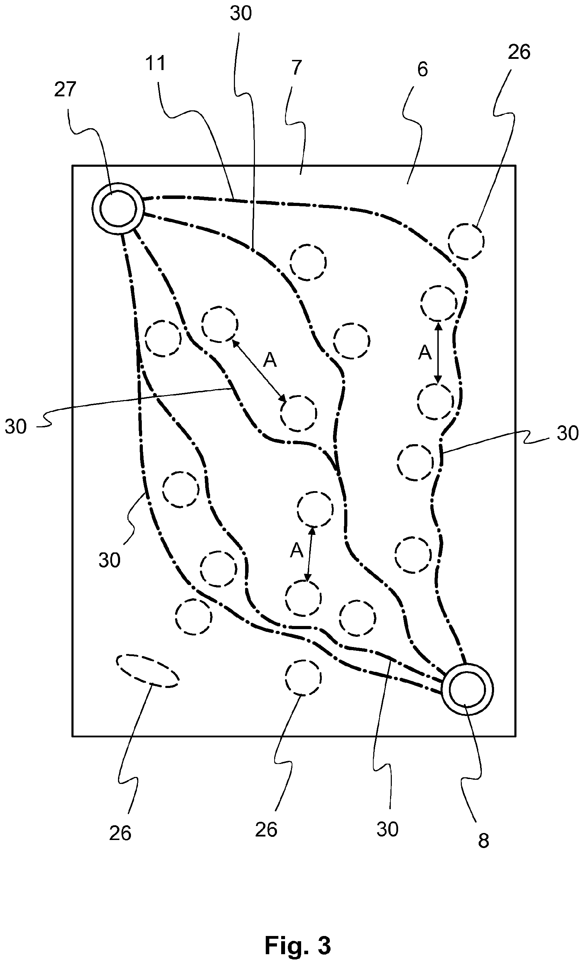

Ein entsprechend ausgebildetes Wärmetauscherelement 6 ist in Figur 3 in einer Draufsicht gezeigt, wobei die innen liegenden Verbindungsstellen 26 durch gestrichelte Linien dargestellt sind.

In jedem Fall umfasst das Wärmetauscherelement 6 ein bezogen auf die Blattebene unten liegendes Flächenelement 7, das mit einem darüber liegenden und in Figur 3 sichtbaren oberen Flächenelement 7 über die genannten Verbindungsstellen 26 miteinander verbunden ist. Ferner sind ein Kältemitteleinlass 27 und ein Kältemittelauslass 8 vorhanden, so dass das Wärmetauscherelement 6 in die beschriebene Wärmepumpenanordnung eingebunden werden kann.

Die Verbindungsstellen 26 können kreisrund oder oval (siehe Verbindungsstelle 26 links unten in Figur 3) geformt sein oder auch eine nahezu beliebige andere Form aufweisen. Wesentlich ist, dass es eine Vielzahl von Verbindungsstellen 26 gibt, die den Freiraum 10 zwischen den Flächenelementen 7 begrenzen und ein Umlenken des Kältemittels 11 bewirken, wenn dies vom Kältemitteleinlass 27 zum Kältemittelauslass 8 fließt.

Mögliche Strömungswege sind in Figur 3 durch die dicken Strichpunktlinien mit dem Bezugszeichen 30 dargestellt, wobei die Linien lediglich verdeutlichen sollen, dass das über den Kältemitteleinlass 27 einströmende Kältemittel 11 in mehrere Einzelströme aufgeteilt wird, die sich teilweise auch zwischen dem Kältemitteleinlass 27 und dem Kältemittelauslass 8 wieder vereinen. Hierdurch entsteht innerhalb des Wärmetauscherelements 6 eine turbulente Strömung, die den Wärmeübergang vom Kältemittel 11 auf ein an der Außenseite des Wärmetauscherelements 6 vorbeistreichenden Mediums oder von diesem Medium auf das Kältemittel 11 verbessert.

Besonders turbulent ist die Strömung, wenn die Abstände A zwischen benachbarten Verbindungsstellen 26 nicht einheitlich sind, wie dies ebenfalls Figur 2 zu entnehmen ist.

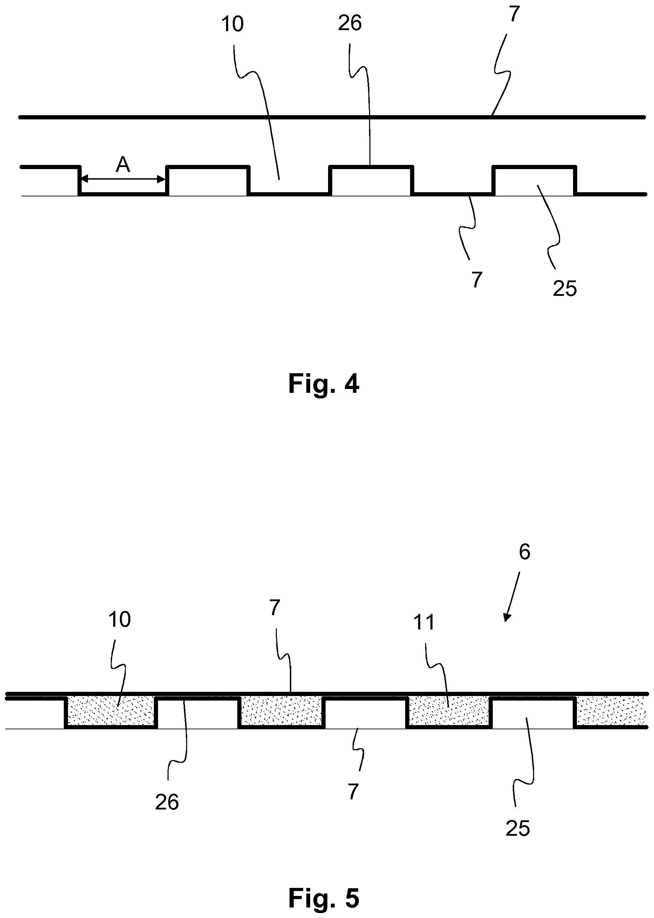

Eine mögliche Ausführung der Flächenelemente 7 zeigen die Figuren 4 und 5, wobei die in Figur 4 noch beabstandeten Flächenelemente 7 in Figur 5 miteinander verbunden, beispielsweise im Bereich der Verbindungsstellen 26 miteinander verlötet, sind (Figur 4 dient also lediglich der besseren Ansicht der eigentlich verbundenen Flächenelemente 7). Ferner sei darauf hingewiesen, dass es sich nur um einen Ausschnitt handelt, so dass die gezeigten Flächenelemente 7 bezogen auf die Blattebene rechts und links in einem nicht dargestellten Randbereich enden, dessen genaue Ausgestaltung jedoch nicht Gegenstand der vorliegenden Erfindung ist.

Wie nun den Figuren 4 und 5 zu entnehmen ist, ist das obige Flächenelement 7 eben ausgebildet, wobei die Ausbuchtungen 25 und die hiervon gebildeten Verbindungsstellen 26 durch das untere Flächenelement 7 gebildet sind.

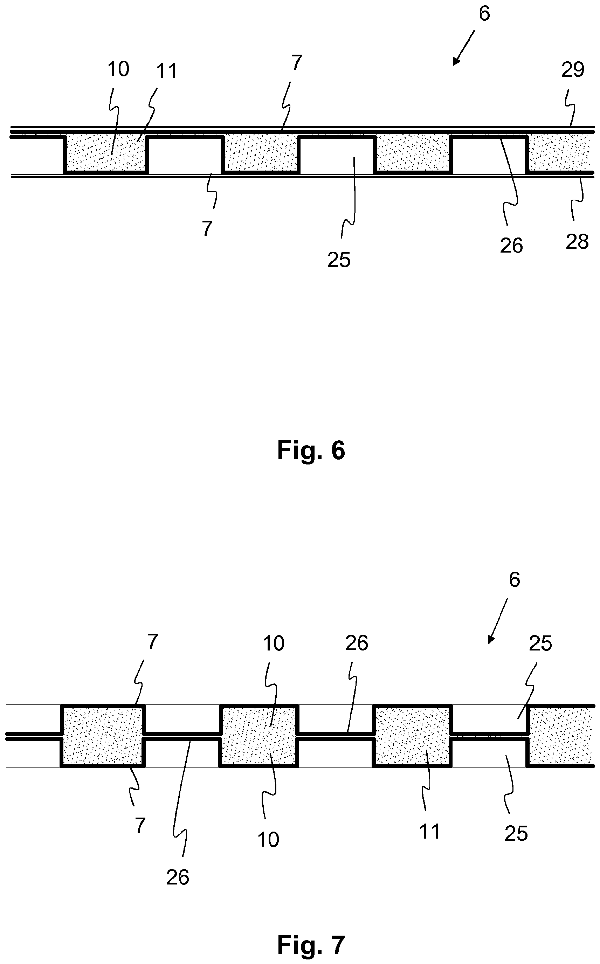

Figur 5 zeigt nun, dass die nach oben gerichteten Ausbuchtungen 25 des unteren Flächenelements 7 beim fertig montierten Wärmetauscherelement 6 an dem oberen Flächenelement 7 anliegen und damit die erfindungsgemäßen Verbindungsstellen 26 definieren. Beide Flächenelemente 7 können im Bereich der Verbindungsstellen 26 beispielsweise verlötet sein. Der in Figur 5 gezeigte dünne Spalt zwischen den Flächenelementen 7 dient lediglich der besseren optischen Unterscheidbarkeit beider Flächenelemente 7. In Wirklichkeit liegen beide Flächenelemente 7 im Bereich der Ausbuchtungen 25 selbstverständlich aneinander an. Dies gilt im Übrigen auch für die Figuren 6 und 7.

Zwischen den Flächenelementen 7 und zwischen den Ausbuchtungen 25 ist schließlich ein Freiraum 10 vorhanden, durch den das Kältemittel 11 strömen kann.

Eine weitere Ausführung zeigt Figur 6. Hier ist das Wärmetauscherelement 6 zusätzlich nach außen hin mit weiteren plattenförmigen Elementen versehen. Während im bezogen auf die Blattebene oberen Bereich eine als Verstärkung wirkende Verkleidung 29 vorhanden ist, die beispielsweise die von außen sichtbare Fläche des oberen Flächenelements 7 bilden kann (dies kann von Vorteil sein, wenn die Verkleidung 29 den Aufnahmeraum 1 direkt begrenzt), im unteren Bereich ist eine Isolierung 28 angeordnet, die das Wärmetauscherelement 6 in diesem Bereich isoliert und sicherstellt, dass möglichst wenig Wärme nach unten aus dem Wärmetauscherelement 6 austritt.

Selbstverständlich kann das Wärmetauscherelement 6 auch nur eine Verkleidung 29 oder nur eine Isolierung 28 oder aber auch beidseitig eine Verkleidung 29 und beidseitig eine Isolierung 28 aufweisen. Auch ist es möglich, dass sich die Isolierung 28 auf der dem Aufnahmeraum 1 zugewandten Seite befindet. Auch kann eine Isolierung 28 mit einer Verkleidung 29 auf einer oder beiden Seiten des Wärmetauscherelements 6 kombiniert werden.

Figur 7 zeigt, dass es auch denkbar ist, dass beide Flächenelemente 7 Ausbuchtungen 25 aufweisen, wobei die Flächenelemente 7 über die Ausbuchtungen 25 miteinander verbunden sein können.

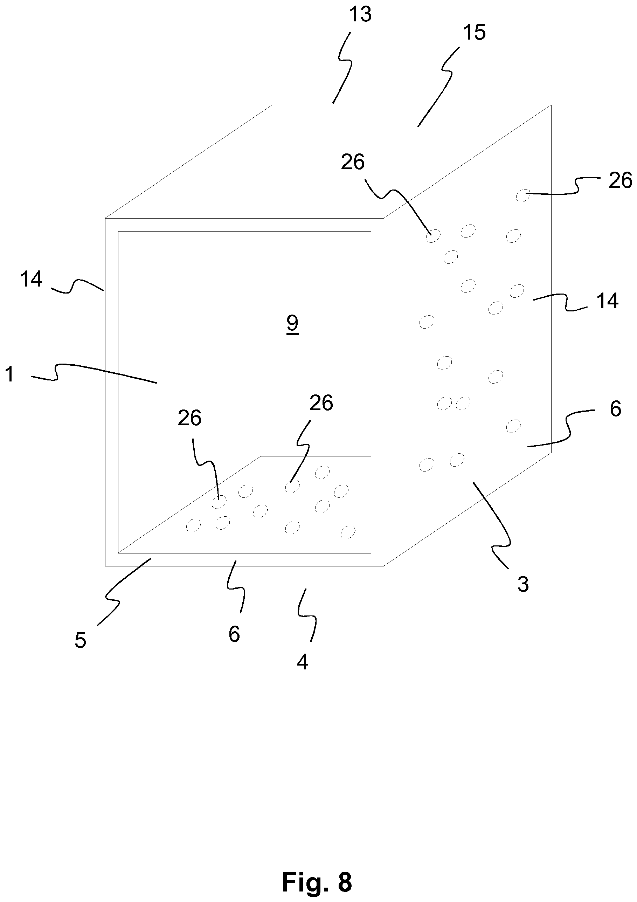

Ebenso vorteilhaft ist schließlich die in Figur 8 gezeigte Ausführung, bei der die Wärmetauscherelemente 6 der Wärmepumpenanordnung oder zumindest ein Teil derselben nicht an einer der Wandungen 4, 9, 14, 15 der Haushaltsgeschirrspülmaschine angebracht sind. Vielmehr werden eine oder mehrere Wandungen 4, 9, 14, 15 bzw. zumindest Abschnitte derselben direkt durch ein Wärmetauscherelement 6 gebildet.

Figur 8 zeigt in diesem Zusammenhang, dass die Verbindungsstellen 26 bzw. Ausbuchtungen 25 und damit auch der Freiraum 10, zwischen den entsprechenden Flächenelementen 7 in diesem Fall innerhalb einer oder mehreren Wandungen 4, 9, 14, 15 verlaufen. Der Wärmeübergang zwischen dem Kältemittel 11 der Wärmepumpenanordnung und dem Aufnahmeraum 1 bzw. der darin zirkulierenden Luft und/oder der darin zirkulierenden Spülflotte ist in diesem Fall gegenüber dem Fall optimiert, der in Figur 2 gezeigt ist.

Der Freiraum 10 kann sich über mehrere Wandungen 4, 9, 14, 15 erstrecken. Beispielsweise wäre es denkbar, dass der gesamte Spülbehälter 13 aus zwei ein- oder mehrfach abgewinkelten Flächenelementen 7 besteht, die gleichzeitig ein oder mehrere Wärmetauscherelemente 6 und die Begrenzung des Aufnahmeraums 1 bilden.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1.: Aufnahmeraum
- 2.: Spülgut
- 3.: Verdampfer
- 4.: Bodenwandung des Spülbehälters
- 5.: Verflüssiger
- 6.: Wärmetauscherelement
- 7.: Flächenelement
- 8.: Kältemittelauslass
- 9.: Rückwandung des Spülbehälters
- 10.: Freiraum
- 11.: Kältemittel
- 12.: Tür
- 13.: Spülbehälter
- 14.: Seitenwandung des Spülbehälters
- 15.: Deckenwandung des Spülbehälters
- 16.: Wasserzulauf
- 17.: Spülflottenablauf
- 18.: Umwälzpumpe
- 19.: Verdichter
- 20.: Expansionsorgan
- 21.: Sprüharm
- 22.: Geschirrkorb
- 23.: Spülflottenleitung
- 24.: Kältemittelleitung
- 25.: Ausbuchtung
- 26.: Verbindungsstelle
- 27.: Kältemitteleinlass
- 28.: Isolierung
- 29.: Verkleidung
- 30.: Strömungsweg

- A: Abstand zwischen zwei Verbindungsstellen

## Patentansprüche

1. Haushaltsgeschirrspülmaschine mit einem Aufnahmeraum (1) zur Aufnahme von Spülgut (2), wobei die Haushaltsgeschirrspülmaschine eine Wärmepumpenanordnung mit wenigstens einem Verdampfer (3) zum Verdampfen eines Kältemittels (11) und einem Verflüssiger (5) zum Kondensieren des Kältemittels (11) umfasst, wobei der Verdampfer (3) und/oder der Verflüssiger (5) ein oder mehrere wenigstens abschnittsweise flächig ausgebildete Wärmetauscherelemente (6) umfassen, wobei wenigstens eines der Wärmetauscherelemente (6) zwei Flächenelemente (7) umfasst, die stellenweise über Verbindungsstellen (26) in Verbindung stehen, wobei die Flächenelemente (7) und die Verbindungsstellen (26) einen Freiraum (10) begrenzen, über den das Kältemittel (11) das Wärmetauscherelement (6) passieren kann, wobei die Verbindungsstellen (26) derart angeordnet sind, dass das Kältemittel (11) beim Passieren des Wärmetauscherelements (6) mehrfach umgelenkt und dabei vermischt wird, und wobei die Verbindungsstellen (26) durch Ausbuchtungen (25) eines oder beider Flächenelemente (7) gebildet sind, **dadurch gekennzeichnet, dass** die Verbindungsstellen (26) zumindest teilweise unterschiedliche Abstände (A) zueinander aufweisen, so dass die Verbindungsstellen (26) nicht gleichmäßig über das Wärmetauscherelement (6) verteilt sind.

2. Haushaltsgeschirrspülmaschine gemäß dem vorangegangenen Anspruch, **dadurch gekennzeichnet, dass** die Ausbuchtungen (25) eines ersten Flächenelements (7) mit einem zweiten Flächenelement (7) in direktem Kontakt stehen, wobei die die Ausbuchtungen (25) des ersten Flächenelements (7) umgebenden Bereiche des ersten Flächenelements (7) vom zweiten Flächenelement (7) beabstandet sind.

3. Haushaltsgeschirrspülmaschine gemäß einem der vorangegangenen Ansprüche, **dadurch gekennzeichnet, dass** wenigstens ein Wärmetauscherelement (6) zwei Flächenelemente (7) in Form von Metall- oder Kunststoffplatten umfasst, die stoffschlüssig, formschlüssig oder mit Hilfe eines Haftmittels miteinander verbunden sind.

4. Haushaltsgeschirrspülmaschine gemäß einem der Ansprüche 1 bis 3, **dadurch gekennzeichnet, dass** wenigstens ein Wärmetauscherelement (6) zwei Flächenelemente (7) umfasst, von denen lediglich eines Ausbuchtungen (25) aufweist.

5. Haushaltsgeschirrspülmaschine gemäß einem der vorangegangenen Ansprüche, **dadurch gekennzeichnet, dass** wenigstens ein Wärmetauscherelement (6) zwei Flächenelemente (7) umfasst, wobei beide Flächenelemente (7) Ausbuchtungen (25) aufweisen, und wobei die beiden Flächenelemente (7) zumindest abschnittsweise über die jeweiligen Ausbuchtungen (25) miteinander verbunden sind.

6. Haushaltsgeschirrspülmaschine gemäß einem der vorangegangenen Ansprüche, **dadurch gekennzeichnet, dass** die beiden Flächenelemente (7) bezüglich einer Kontaktebene der beiden Flächenelemente (7) spiegelsymmetrisch ausgebildet sind.

7. Haushaltsgeschirrspülmaschine gemäß einem der vorangegangenen Ansprüche, **dadurch gekennzeichnet, dass** zumindest eine den Aufnahmeraum (1) begrenzende Wandung (4; 9; 14; 15) wenigstens abschnittsweise durch ein Wärmetauscherelement (6) gebildet ist.

8. Haushaltsgeschirrspülmaschine gemäß einem der vorangegangenen Ansprüche, **dadurch gekennzeichnet, dass** der Aufnahmeraum (1) durch eine Tür (12) und einen Spülbehälter (13) begrenzt ist, wobei zumindest ein Wärmetauscherelement (6) durch den Spülbehälter (13) gebildet ist.

9. Haushaltsgeschirrspülmaschine gemäß dem vorangegangenen Anspruch, **dadurch gekennzeichnet, dass** ein durch den Spülbehälter (13) gebildetes und als Verdampfer (3) dienendes Wärmetauscherelement (6) eine Seitenwandung (14), eine Deckenwandung (15) und/oder eine Rückwandung (4) des Spülbehälters (13) bildet.

10. Haushaltsgeschirrspülmaschine gemäß Anspruch 8 oder 9, **dadurch gekennzeichnet, dass** ein durch den Spülbehälter (13) gebildetes und als Verflüssiger (5) dienendes Wärmetauscherelement (6) eine Bodenwandung (4) des Spülbehälters (13) oder einen Abschnitt derselben bildet.

11. Haushaltsgeschirrspülmaschine gemäß einem der vorangegangenen Ansprüche, **dadurch gekennzeichnet, dass** wenigstens ein Wärmetauscherelement (6) im Bereich einer den Aufnahmeraum (1) begrenzenden Wandung (4; 9; 14; 15) angeordnet ist und mit der Wandung (4; 9; 14; 15) in wärmeleitendem Kontakt steht.

## Claims

1. Household dishwasher with a receiving area (1) for receiving items to be washed (2), wherein the household dishwasher comprises a heat pump arrangement with at least one evaporator (3) for evaporating a coolant (11) and a condenser (5) for condensing the coolant (11), wherein the evaporator (3) and/or the condenser (5) comprise one or more heat exchanger elements (6) which are embodied as being flat at least in sections, wherein at least one of the heat exchanger elements (6) comprises two area elements (7), which are connected via connection points (26) in places, wherein the area elements (7) and the connection points (26) delimit a free space (10), via which the coolant (11) is able to pass the heat exchanger element (6), wherein the connection points (26) are arranged such that the coolant (11) is diverted multiple times when passing the heat exchanger element (6), and is mixed in the process, and wherein the connection points (26) are formed by protrusions (25) of one or both area elements (7), **characterised in that** the connection points (26) at least partially have different distances (A) from one another, so that the connection points (26) are not equally distributed over the heat exchanger element (6).

2. Household dishwasher according to the preceding claim, **characterised in that** the protrusions (25) of a first area element (7) are in direct contact with a second area element (7), wherein the regions of the first area element (7) surrounding the protrusions (25) of the first area element (7) are spaced apart from the second area element (7).

3. Household dishwasher according to one of the preceding claims, **characterised in that** at least one heat exchanger element (6) comprises two area elements (7) in the form of metal or plastic plates, which are interconnected with a material bond, a form fit or with the aid of an adhesive agent.

4. Household dishwasher according to one of claims 1 to 3, **characterised in that** at least one heat exchanger element (6) comprises two area elements (7), of which only one has protrusions (25).

5. Household dishwasher according to one of the preceding claims, **characterised in that** at least one heat exchanger element (6) comprises two area elements (7), wherein both area elements (7) have protrusions (25), and wherein the two area elements (7) are interconnected, at least in sections, via the respective protrusions (25).

6. Household dishwasher according to one of the preceding claims, **characterised in that** the two area elements (7) are embodied with mirror symmetry in relation to a contact plane of the two area elements (7).

7. Household dishwasher according to one of the preceding claims, **characterised in that** at least one wall (4; 9; 14; 15) delimiting the receiving area (1) is formed, at least in sections, by a heat exchanger element (6).

8. Household dishwasher according to one of the preceding claims, **characterised in that** the receiving area (1) is delimited by a door (12) and a dishwasher cavity (13), wherein at least one heat exchanger element (6) is formed by the dishwasher cavity (13).

9. Household dishwasher according to the preceding claim, **characterised in that** a heat exchanger element (6) formed by the dishwasher cavity (13) and serving as an evaporator (3) forms a side wall (14), a ceiling wall (15) and/or a rear wall (4) of the dishwasher cavity (13).

10. Household dishwasher according to claim 8 or 9, **characterised in that** a heat exchanger element (6) formed by the dishwasher cavity (13) and serving as a condenser (5) forms a base wall (4) of the dishwasher cavity (13) or a section thereof.

11. Household dishwasher according to one of the preceding claims, **characterised in that** at least one heat exchanger element (6) is arranged in the region of a wall (4; 9; 14; 15) delimiting the receiving area (1) and is in thermally conductive contact with the wall (4; 9; 14; 15).

## Revendications

1. Lave-vaisselle ménager avec un espace d'accueil (1) pour l'accueil de la vaisselle (2), dans lequel le lave-vaisselle ménager comprend un agencement de pompe à chaleur avec au moins un évaporateur (3) pour l'évaporation d'un agent frigorifique (11) et un condenseur (5) pour la condensation de l'agent frigorifique (11), dans lequel l'évaporateur (3) et/ou le condenseur (5) comprennent un ou plusieurs élément(s) d'échangeur de chaleur (6) exécutés sous forme plate au moins par sections, dans lequel au moins un des éléments d'échangeur de chaleur (6) comprend deux éléments de surface (7), en liaison par endroits via des points de liaison (26), dans lequel les éléments de surface (7) et les points de liaison (26) délimitent un espace libre (10), via lequel l'agent frigorifique (11) peut traverser l'élément d'échangeur de chaleur (6), dans lequel les points de liaison (26) sont disposés de telle sorte que l'agent frigorifique (11) est dévié plusieurs fois et dès lors mélangé lors de la traversée de l'élément d'échangeur de chaleur (6), et dans lequel les points de liaison (26) sont constitués par des bombements (25) d'un ou des deux éléments de surface (7), **caractérisé en ce que** les points de liaison (26) présentent des écartements (A) au moins en partie différents l'un par rapport à l'autre, de sorte que les points de liaison (26) ne sont pas uniformément répartis sur l'élément d'échangeur de chaleur (6).

2. Lave-vaisselle ménager selon la revendication précédente, **caractérisé en ce que** les bombements (25) d'un premier élément de surface (7) se trouvent en contact direct avec un deuxième élément de surface (7), dans lequel les zones du premier élément de surface (7) entourant les bombements (25) du premier élément de surface (7) sont écartées du deuxième élément de surface (7).

3. Lave-vaisselle ménager selon l'une des revendications précédentes, **caractérisé en ce qu'**au moins un élément d'échangeur de chaleur (6) comprend deux éléments de surface (7) sous la forme de plaques métalliques ou en plastique, lesquelles sont reliées l'une à l'autre par complémentarité de matières, de formes ou à l'aide d'un agent adhésif.

4. Lave-vaisselle ménager selon l'une des revendications 1 à 3, **caractérisé en ce qu'**au moins un élément d'échangeur de chaleur (6) comprend deux éléments de surface (7) dont un seul présente des bombements (25).

5. Lave-vaisselle ménager selon l'une des revendications précédentes, **caractérisé en ce qu'**au moins un élément d'échangeur de chaleur (6) comprend deux éléments de surface (7), dans lequel les deux éléments de surface (7) présentent des bombements (25), et dans lequel les deux éléments de surface (7) sont reliés l'un à l'autre au moins par sections via les bombements (25) respectifs.

6. Lave-vaisselle ménager selon l'une des revendications précédentes, **caractérisé en ce que** les deux éléments de surface (7) sont exécutés de façon symétrique par rapport à un plan de contact des deux éléments de surface (7).

7. Lave-vaisselle selon l'une des revendications précédentes, **caractérisé en ce qu'**au moins une paroi (4 ; 9 ; 14 ; 15) délimitant l'espace d'accueil (1) est constituée au moins par sections par un élément d'échangeur de chaleur (6).

8. Lave-vaisselle ménager selon l'une des revendications précédentes, **caractérisé en ce que** l'espace d'accueil (1) est délimité par une porte (12) et une cuve de lavage (13), dans lequel au moins un élément d'échangeur de chaleur (6) est constitué par la cuve de lavage (13).

9. Lave-vaisselle ménager selon la revendication précédente, **caractérisé en ce qu'**un élément d'échangeur de chaleur (6) constitué par la cuve de lavage (13) et servant d'évaporateur (3) constitue une paroi latérale (14), une paroi supérieure (15) et/ou une paroi arrière (4) de la cuve de lavage (13).

10. Lave-vaisselle ménager selon la revendication 8 ou 9, **caractérisé en ce qu'**un élément d'échangeur de chaleur (6) constitué par la cuve de lavage (13) et servant de condenseur (5) constitue une paroi inférieure (4) de la cuve de lavage (13) ou une section de celle-ci.

11. Lave-vaisselle ménager selon l'une des revendications précédentes, **caractérisé en ce qu'**au moins un élément d'échangeur de chaleur (6) est disposé dans la zone d'une paroi (4 ; 9 ; 14 ; 15) délimitant l'espace d'accueil (1) et se trouve en contact thermoconducteur avec la paroi (4 ; 9 ; 14 ; 15).
